# EUROPÄISCHE PATENTSCHRIFT

(11) **EP 0 676 064 B1**
(45) Veröffentlichungstag und Bekanntmachung des Hinweises auf die Patenterteilung: **11.03.1998**
(21) Anmeldenummer: 94930929.8
(22) Anmeldetag: 26.10.1994
(51) Int. Cl.: G05B 23/02

(54) **DATENERFASSUNGS- UND STEUERUNGSGERÄT FÜR GASDRUCKREGLERSTATIONEN**
DATA INPUT AND CONTROL EQUIPMENT FOR GAS PRESSURE REGULATING STATIONS
APPAREIL DE SAISIE DE DONNEES ET DE COMMANDE DE STATIONS DE REGULATION DE LA PRESSION DE GAZ

(30) Priorität: 26.10.1993 DE 9316327 U
(43) Veröffentlichungstag der Anmeldung: 11.10.1995
(73) Patentinhaber: WISSENSCHAFTLICHE WERKSTATT FÜR UMWELTMESSTECHNIK GmbH, D-20459 Hamburg (DE); HAMBURGER GASWERKE GmbH, 20097 Hamburg (DE)
(72) Erfinder: PALOCZ-ANDRESEN, Michael, D-20459 Hamburg (DE)
(86) Internationale Anmeldenummer: DE9401256
(87) Internationale Veröffentlichungsnummer: WO9512151

(56) Entgegenhaltungen:
- WO-A-93/16426
- DE-A- 3 402 709
- SE-A- 466 359
- US-A- 4 403 297
- US-A- 5 008 662

## Beschreibung

In den Gasversorgungsstationen, vor allem in Gasverteilungsnetzen, ist eine Datenaufnahme von verschiedenen Parametern, die den Betriebszustand der Anlage charakterisieren, wesentlich. In den meisten Gasdruckreglerstationen werden die Parameter wie der Gasdruck und die Gastemperatur mittels mechanischer Schreibgeräte erfaßt. Diese Schreiber besitzen mechanische Meßwertaufnehmer, deren Formänderung mechanisch auf ein Hebelwerk übertragen wird. Der Meßwert wird auf einen Papierstreifen mittels Schreiberstift aufgetragen. Der Vorschub des Registrierstreifens erfolgt durch ein mechanisches Ziehwerk mittels Federkraft. Ihr Nachteil liegt in der häufigen Betreuung einerseits und im Aufbewahren der Papierstreifen andererseits. Die Papierbandschreiber müssen regelmäßig aufgezogen, der Stift gereinigt und die Tinte nachgefüllt werden. Besonders arbeitsaufwendig ist die richtige Aufbewahrung der Streifen. Die Schriebe sind wie Protokolle, d.h. sie müssen meist mehrere Jahre lang aufbewahrt und bei Bedarf aus dem Archiv herausgeholt werden. Die Auswertung kann nur in groben Zügen erfolgen, da der Zeitmaßstab mit einem sehr langsamen Vorschub von ca. 1 cm/h keine feine zeitliche Auflösung ermöglicht.

Aus WO 93/16426 ist ein Meßdatenerfassungssystem bekannt. Dieses ist jedoch speziell für die Steuerung, Regelung und Überwachung von Heizungssystemen ausgelegt. So ist die drahtgebundene Vernetzung der Meßdatenerfassungsgeräte ein wesentliches Merkmal. Der Einsatz dieser Geräte in einer EEx-Zone ist nicht möglich. Außerdem sind keine Maßnahmen zur Energieeinsparung beschrieben.

Aufgabe der vorliegenden Erfindung ist es, ein Datenerfassungs- und Steuerungsgerät anzugeben, welches mit einer hohen Genauigkeit die Daten aufnimmt und speichert und energiesparend und zuverlässig arbeitet.

Diese Aufgabe ist durch das in Anspruch 1 angegebene Gerät gelöst. Das Verfahren zu einer entsprechenden Datenaufnahme und Speicherung ist in Anspruch 12 angegeben. Die Unteransprüche stellen vorteilhafte Weiterbildungen dar. Das erfindungsgemäße Gerät ist mit einer Datenaufnahme und Registriereinheit ausgestattet, wobei die Daten durch einen Sensor aufgenommen und in einem Mikroprozessor gespeichert und verarbeitet werden. Ferner weist das Gerät eine Einheit auf, mit der ein getakteter Meßbetrieb bewirkt und gesteuert wird. Da die Gasdruckreglerstationen, in denen derartige Geräte eingesetzt werden, häufig ohne Stromversorgung arbeiten, ist es wesentlich, daß das Gerät neben einem Stromanschluß auch eine autarke Stromversorgung aufweist. Diese kann z.B. durch einen Akkumulator oder eine Batterie gebildet sein, sie kann auch in Form eines Windrades oder einer Solarzelle vorliegen. Der getaktete Betrieb des Gerätes mit z.B. einer Wake-up Schaltung des Mikroprozessors ermöglicht eine äußerst stromsparende Betriebsweise. Ferner werden durch ein gleitendes Meßwertfenster nur Daten aufgenommen, die die Grenzwerte über- oder unterschreiten. Neben den die Grenzwerte über- oder unterschreitenden Werten werden auch die vor- und nachliegenden Werte aufgenommen. Diese Aufnahmeart erlaubt Rückschlüsse auf die zur Grenzwertverletzung führende Störung. Durch die Komprimierung von veränderlichen Daten außerhalb des Grenzbereiches mit Anfangs- und Endwert werden weitere Speicherplätze gespart. Es ist besonders vorteilhaft, wenn die Daten mittels einer MemoryCard aus dem Datenerfassungsgerät aus- und in einen Rechner eingelesen und zusätzlich ausgewertet werden. Die MemoryCard kann gleichzeitig als externer Baustein für die Erweiterung der RAM-Kapazität auf der Mikrocomputerplatine dienen.

Vorteilhaft ist, wenn eine im Gerät installierte Anzeigeeinheit vorhanden ist, welche die Analyse der Daten vor Ort erlaubt. Diese Anzeigeeinheit kann als ein Flüssigkristalldisplay gebildet sein. Ferner weist das Gerät eine Steuerungseinheit zur Steuerung von Betriebskenngrößen und damit der Betriebsarmaturen aufgrund der meßtechnisch erfaßten Werte auf. So kann z.B. der Hinterdruck in der Gasdruckreglerarmatur oder in Spitzenzeiten der Solldruck geregelt werden.

Der Einsatz von Speichereinheiten in Form von MemoryCards als Datenträger ist besonders in explosionsgefährdeten Räumen von Bedeutung. Als Datenaufnahmesensoren für die Erfassung des Gasdruckes werden vorteilhafterweise Piezosensoren eingesetzt.

Die Anpassung der Meßtaktzeiten an die veränderten Betriebsbedingungen der Gasreglerstation erfolgt bei Grenzwertverletzung automatisch. Beim Vorliegen einer Grenzwertverletzung erhöht das Gerät automatisch die Meßtaktzeiten.

Die Meßzyklen sind einstellbar, sie können den Gegebenheiten des Gasnetzes angepaßt werden. Soll ein Gasnetz mit einer großen Pufferkapazität überwacht werden, so können die Taktzeiten höher gewählt werden, da die Gasdruckschwankungen ohnehin langsam erfolgen. Wie bereits oben erwähnt wird bei Grenwertüberschreitungen entweder die Anlage automatisch gesteuert oder ein Alarmsignal ausgegeben. Da die Daten gespeichert sind, ist eine Überprüfung des zurückliegenden Betriebszustandes der Anlage jederzeit möglich.

Es ist wesentlich, daß das Gerät ein explosionsgeschütztes Gehäuse aufweist und keine elektrischen oder elektronischen Teile, die durch Wärmeentwicklung eine Brand- oder Explosionsgefahr darstellen können, besitzt.

Mit dem erfindungsgemäßen Gerät kann auch die Kalibrierung des Aufnahmesensors vorgenommen werden. Dazu wird für die Druckerfassung der tatsächlich im Netz herrschende Druck mit Hilfe eines Präzisionsmanometers abgelesen und als Sollwert in den Mikroprozessor eingegeben. Der am Druckaufnehmer aufgelesene Druck wird mit dem Sollwert softwaremäßig gleichgesetzt. Solche Überwachungsfunktionen werden etwa quartalsmäßig vorgenommen.

Durch den Einsatz des erfindungsgemäßen Gerätes ist eine rechnergestützte Archivierung und Auswertung der aufgenommenen Daten durch entsprechende Sortier- und Grafikprogramme möglich. Eine Ausgabe von zusammenfassenden Protokollen über Grenzwertüberschreitungen, Zeitangaben der Auslesevorgänge und Markierungen, Spannungsverläufen der Akkus und Knopfzellen sowie vorhandenen freien Speicherplätze ist ebenfalls möglich. Die Erfindung wird anhand der in den nachfolgenden Figuren dargestellten Ausführungsbeispiele näher erläutert.

Es zeigen:
- Fig. 1: Eine Symboldarstellung einer einschienigen Gasdruckregleranlage mit dem Druckwerterfassungsgerät.
- Fig. 2: Eine schematische Darstellung einer zweischienigen Gasdruckreglerstation mit dem erfindungsgemäßen Gerät.
- Fig. 3: Systemdarstellung eines erfindungsgemäßen Gerätes.
- Fig. 4: Ein tragbares Datenerfassungsgerät.
- Fig. 5: Datenerfassungsgerät der Fig. 4 in aufgeklappter Form.
- Fig. 6: Eine andere Ausführungsform des tragbaren Gerätes.
- Fig. 7: Darstellung der Meßwertaufnahme bei Druckschwankungen.
- Fig. 8: Eine Darstellung der Unterbringung des tragbaren Gerätes im Druckregelraum.

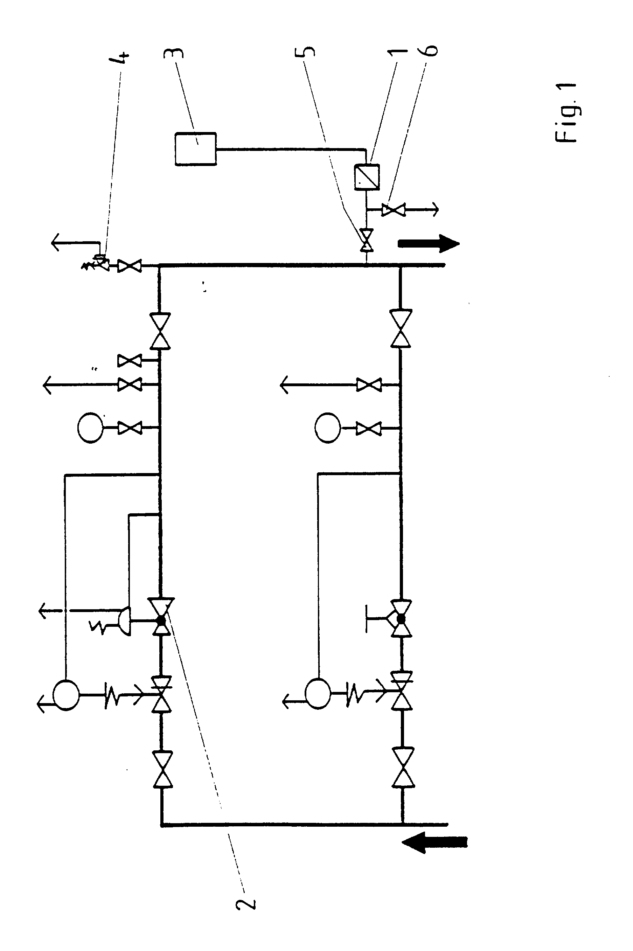

Die wichtigsten Einsatzgebiete für das erfindungsgemäße Datenerfassungs- und Steuerungsgerät sind Gasdruckregelanlagen (dargestellt in Fig. 1), Hausanschlußbereich und Inbetriebnahme von Rohrabschnitten. Wie in Fig. 1 dargestellt dient zur Aufnahme des Druckes ein Piezodruckaufnehmer 1, welcher den in der Gasleitung herrschenden relativen Druck (Meßwert an der Stelle 2) in ein Spannungssignal umsetzt. Die Spannung des Signals liegt zwischen 0 und 5 Volt. Diese Spannung wird durch das Datenerfassungsgerät 3 aufgenommen und gespeichert. Mit Hilfe des Datenerfassungsgerätes 3 wird das Gasdruckregelventil 2 gesteuert. Das Sicherheitsabsperrventil 4, das Absperrventil 5 und das Druckentlastungsventil 6 sind fest eingestellt und werden nicht gesteuert. Die durch das Meßgerät aufgenommenen Meßprotokolle dienen als Grundlage für die Betriebsführung einer derartigen Gasdruckregelanlage. Im Falle der Überwachung von einzelnen Zustandskenngrößen an Hausleitungen wird insbesondere der Druck- und Volumenstromverlauf in ausgewählten Versorgungsgebieten beobachtet. Durch den Einsatz des erfindungsgemäßen Gerätes kann z.B. die schnelle Zunahme des Gasverbrauches in Spitzenverbrauchszeiten einfach ausgeglichen werden. Bei einer Zunahme des Gasverbrauches durch Neuanschlüsse können durch die Meßwertaufnahme des erfindungsgemäßen Gerätes die notwendigen Konstruktions- bzw. Erweiterungsmaßnahmen abgeschätzt werden.

Beim Einsatz des Gerätes bei Inbetriebnahme von Rohrleitungen kann die Dichtheit derselben vor der Inbetriebnahme kontrolliert werden.

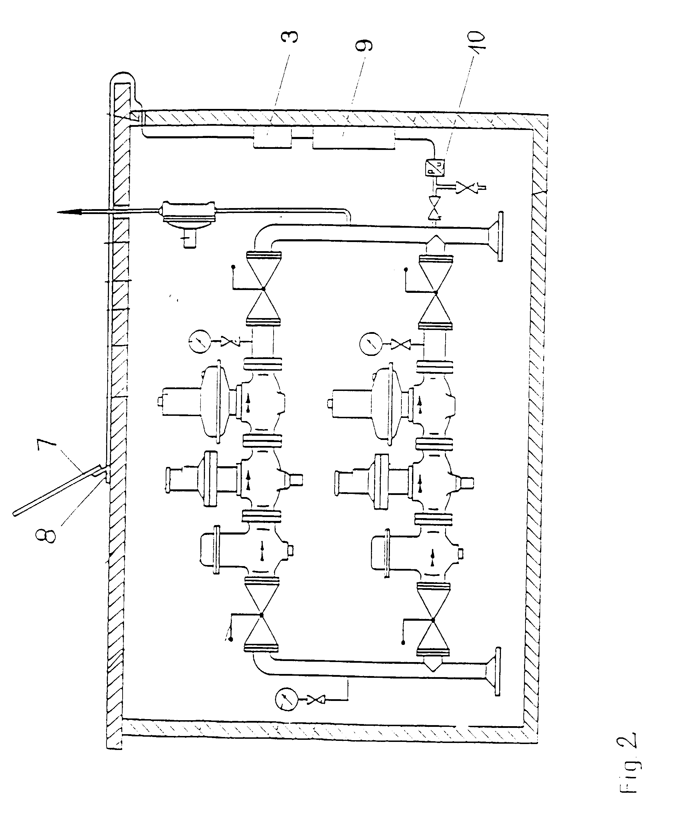

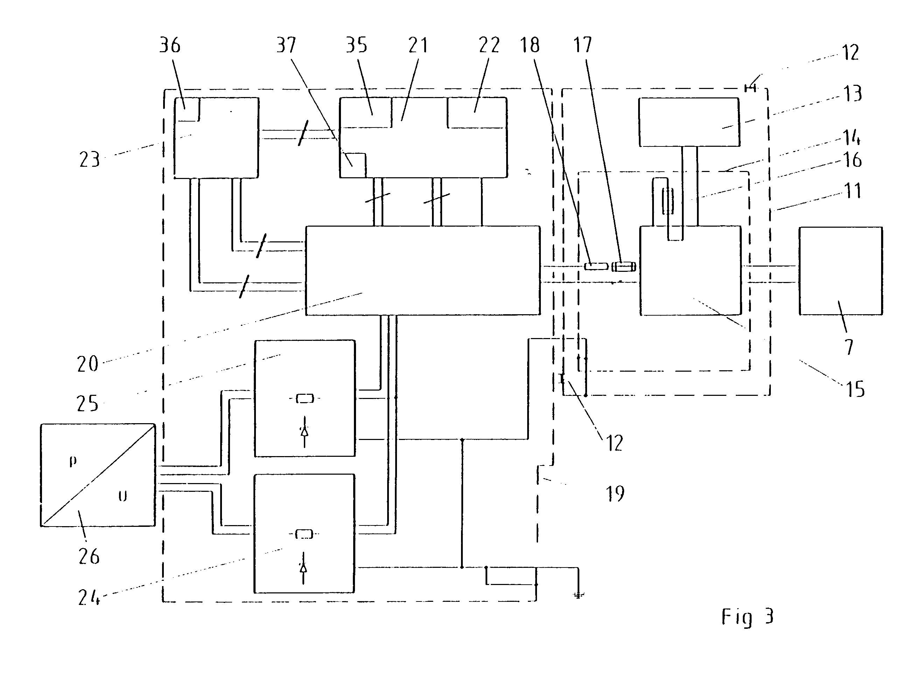

In Fig. 2 ist eine Gasdruckregelstation mit dem erfindungsgemäßen Datenerfassungsgerät 3 dargestellt. Das hier dargestellte Gerät weist eine eigene Energieversorgungseinheit auf, die hier die Form einer Solarzelle 7 hat. Die Solarzelle 7 kann auf dem Dach der Druckregelstation durch einen Träger 8 befestigt werden. Die Kabeldurchführung erfolgt den örtlichen Gegebenheiten entsprechend, z.B. durch einen Wanddurchbruch oder im Erdreich unter Berücksichtigung der notwendigen Sicherheitsabstände. Zu dem Datenerfassungsgerät 3 gehören ferner ein Stromversorgungsteil 9, und ein Meßwertaufnehmer 10. Die Stromversorgungseinheit (Fig. 3) weist ein Gehäuse 11 mit zwei einander gegenüberstehenden Lüftungsöffnungen 12 auf, wobei die eine Öffnung oben, die andere Öffnung diagonal zur Ersten angeordnet ist. Durch diese Öffnung 12 entweicht das im Gehäuse 11 beim Laden des Akkumulators entstehende Wasserstoffgas. Das Gehäuse ist aus Stahlblech. Kunststoffgehäuse können dann eingesetzt werden, wenn keine äußeren elektromagnetischen Störungen vorliegen.

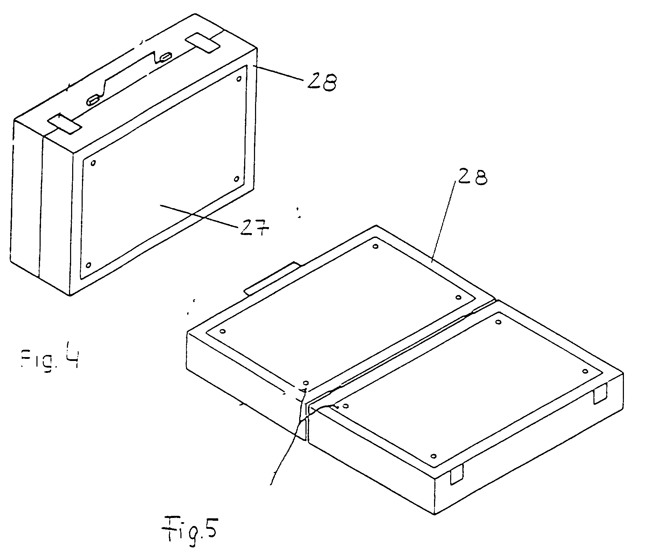

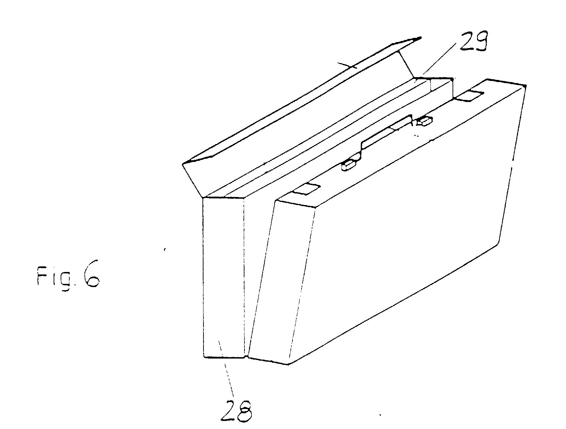

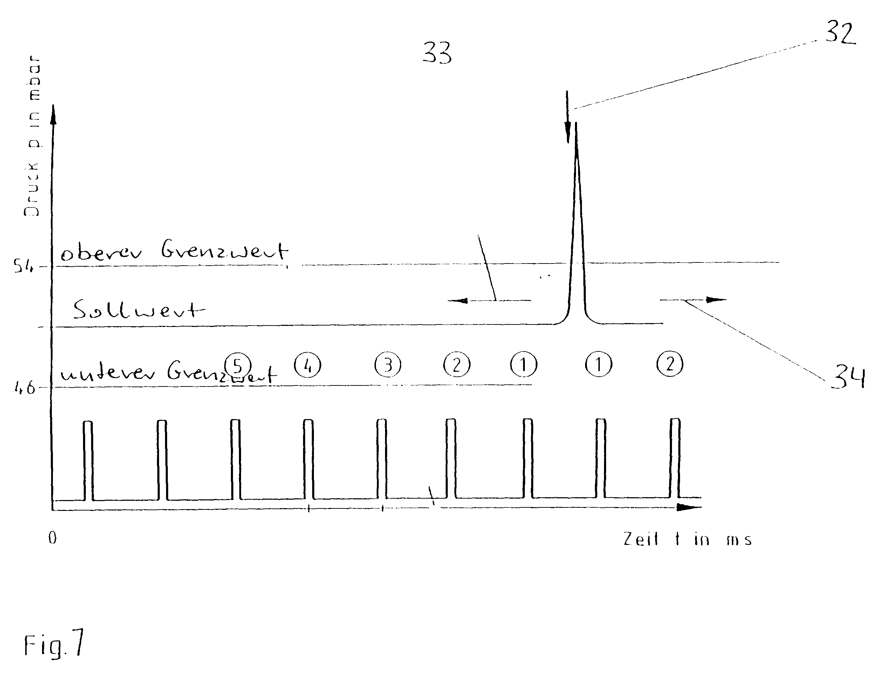

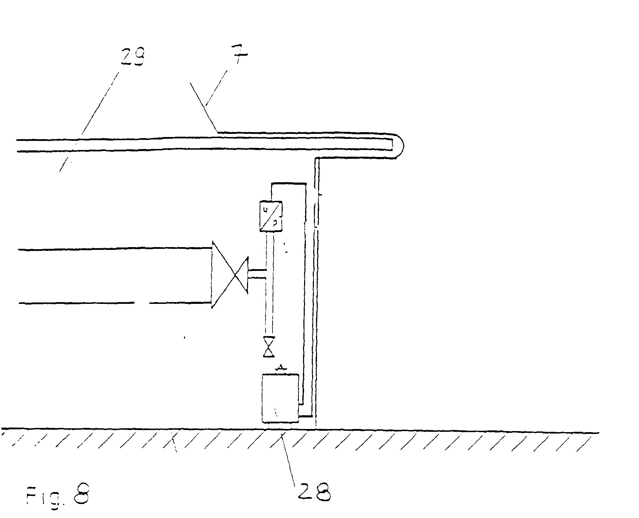

Ohne photovoltaische Stromversorgung als Energiequelle kann eine andere stromsparende Versorgungsart infolge des äußerst sparsamen, getakteten Betriebes problemlos gewählt werden. Für diesen Fall kommen Akkumulatoren 13 und Batterien, z.B. auf Lithium-Basis, in Frage. Akkumulatoren 13 oder Batterien werden vorzugsweise dort eingesetzt, wo durch Schatten oder durch andere örtliche Gegebenheiten keine photovoltaische oder andere alternative Versorgung möglich ist. Als Akkumulator 13 werden Geräteeinheiten eingesetzt, die eine geringe Ausgasung beim Laden aufweisen. Der Akkumulator 13 ist im oberen Teil des Gehäuses 11 eingesetzt, damit das Wasserstoffgas frei nach außen entweichen kann. Seine Größe ist so ausgelegt, daß die Erfassung der Daten bei der gewählten Taktzeit mindestens bis zur im Arbeits- oder Gesetzblatt geforderten nächsten Sichtkontrolle gewährleistet wird. Wird die Stromversorgung unterbrochen, so ist die vom entsprechend ausgelegten Akkumulator gespeiste Meßdatenerfassungsanlage in der Lage, die Meßdaten ohne Unterbrechung bis zur nächsten Kontrolle aufzunehmen und zu speichern. Im Gehäuse 11 befindet sich neben dem Akkumulator 13 ein weiteres, gasschwadensicheres Gehäuse 14 mit den elektrischen Teilen der Stromversorgung, insbesondere Solarladeregler 15 für die Solarzelle, Sicherung 16 und 17 und Strombegrenzungswiderstand 18. Dieses Gehäuse 14 muß gasschwadensicher sein, da hier keine Eigensicherheit vorliegt. Die Versorgung des dritten Gehäuses 19, des Meßwerterfassungsteils, ist eigensicher ausgeführt. Zur Kurzschlußstrombegrenzung ist ein Drahtwiderstand 18 eingebaut, zusätzlich geschützt durch eine vorgeschaltete Feinsicherung. Der Schutz gegen zu hohe kapazitive Ströme wird durch diesen Widerstand 18 gewährleistet. Vor Öffnen des gasschwadensicheren Stromversorgungsgehäuses 14 muß die Gasfreiheit in der Gasdruckreglerstation geprüft werden. Die Gasschwadensicherheit soll nach Verschließen des Gehäuses entweder vom Hersteller garantiert oder durch Dichtheitsmessungen vor Ort überprüft werden. Der Solarladeregler 15 verfügt über einen Überladeschutz, Tiefentladeschutz, Gasungsregelung und über eine temperaturgeführte Lade-Endspannung. Der Drahtwiderstand 18 auf der Platine ist ein Leistungswiderstand. Die Grobsicherung 16 hat die Aufgabe, den Strom aus dem Akkumulator 13 zu begrenzen. Die Feinsicherung 17 stellt den Feinschutz für die bedingt eigensichere Versorgung des Meßwerterfassungsteils dar. Das Meßwerterfassungsteil muß leicht zugänglich und handhabbar sein. Die Bedienung dieses Teiles 19 ist in der EEx-Zone 2 jeder Zeit möglich. Es besteht aus einem leicht zugänglichen Gehäuse 19 (dem Stromversorgungsgehäuse ähnlich, möglichst ebenfalls aus Stahlblech) mit dem Schutzgrad IP 40 oder mehr. Wenn ein Kunststoffgehäuse gewählt wird, darf der spezielle Ableitwiderstand nicht größer als 10 Ohm × cm sein, damit keine Feuergefahr durch Entstehung von Funken, verursacht durch elektrostatische Aufladung, entsteht. In diesem Gehäuse 19 befinden sich die Grundplatine 20, das Mikrocomputermodul 21 einschließlich Lithiumzelle 22, Frontplatte 23 mit Tasten, Leuchtdioden, Flüssigkristallanzeige und serieller Schnittstelle sowie Strombarrieren 24 für die Begrenzung des die Meßzellen speisenden Versorgungsstromes und weitere Strombarrieren 25 für die Begrenzung des von den Meßzellen ankommenden Stromsignals. Im Mittelpunkt des Meßwerterfassungs- und Speicherungsgerätes steht das Mikrocomputermodul 21, das über ein software-mäßig betreibbares wake-up-Modul verfügt. Die periodische Abschaltung der gesamten Hardware-Technik, abgesehen von der inneren Uhr des Systems, spart viel Energie. Die Pausen- und Betriebszeiten werden durch das Personal programmiert. Meist können wesentlich kürzere Betriebszeiten als Pausenzeiten gewählt werden, z.B. 100 ms Betriebszeit und 10 s Pause, (Fig. 7). Der aus dem Akkumulator kommende Strom wird durch eine Strombarriere / Fig. 3 (24 und 25) / auf ein Mindestmaß, entsprechend den Anforderungen der Eigensicherheit, begrenzt. So wird der Strom, der z.B. im Kurzschlußfall sogar mehrere Ampere betragen könnte, auf einige mA herabgesetzt. Mit Hilfe von Tasten können die wichtigsten Funktionen betätigt und die gewünschten Informationen auf dem Displayfeld angezeigt werden. Solche Informationen sind: Momentanwert der jeweiligen physikalischen Kenngröße mit Uhrzeit, Grenzwertüberschreitung, vorhandene freie Speicherkapazität, Spannungszustand des Akkumulators und der Lithiumzelle, Verlauf der Meßkurven in graphischer Form in verschiedenen Zeitabschnitten der letzten Überwachungsperiode. Die wichtigsten Eingaben können u.a. sein: Marke setzen, wenn der Betriebszustand in der Regelstation gewollt verstellt wird, z.B. bei Reparaturarbeiten, Auslesen mit der MemoryCard, direktes Auslesen mit tragbaren Rechnern wie Laptop oder Notebook. Zusätzliche Leuchtdioden können weitere Informationen wie Erfolg oder Mißerfolg, z.B. beim Auslesen der Daten mit oder ohne MemoryCard oder Fehlerzustände im Gerät, charakteriesieren. Die Schnittstelle dient zur Verbindung der Anlage mit einem externen, im Regelfall tragbaren Rechner, wie Laptop oder Notebook, um die Parametrierung der Anlage vorzunehmen und die gesammelten Daten aus dem Gerät durch unmittelbares Auslesen abzuholen. Die aufsichtsführende Person für den Betrieb von Gasdruckregelstationen haben einen tragbaren Computer, mit dessen Hilfe die Überwachung der Anlage in regelmäßigen Zeitabsänden vorgenommen wird. Damit können die wichtigsten Betriebsparameter wie Länge der Pausen und der Betriebszyklen, Grenzwerte für den Druck (1- oder 2-stufig), Grenzwerte für die Statusanzeigen, Uhrzeit etc. eingestellt werden. Beim Einstellen der Meßtaktzeiten werden nur die Parameter festgehalten, die außerhalb des vorgegebenen Fensters 32 für den jeweiligen Meßbereich liegen. Eine günstige Methode ist z.B. das Festhalten der letzten 5 Meßwerte 33 vor der Grenzwertüber- und - unterschreitung, s. Fig. 7. Ähnlich wichtig ist das Festhalten der der Grenzwertüberschreitung folgenden Meßwerte 34, damit der zeitliche Verlauf des Druckstoßes 32 (negativ oder positiv) gut verfolgt werden kann. Die Grundplatine / Fig. 3 (20) / nimmt die Anpassung des Meßsignals an den Eingang des Prozessors vor. Die Sicherheitsbarrieren / Fig. 3 (24 und 25) / bestehen aus Zenerdioden, Widerständen und Sicherungen. Sie erzeugen für die Meßzelle eine absolute Eigensicherheit. Die Meßzellen 26 sind in der Gasleitung angeordnet und müssen aus diesem Grunde den höchsten Anforderungen der Sicherheitstechnik genügen. Es muß z.B. eine absolute Dichtheit gegenüber der Außenwelt bestehen. Sie müssen Druckstößen, die in der Leitung evtl. auftreten und einen wesentlich höheren Wert (z.B. um den Faktor 2) als im normalen Betrieb, aufweisen können, sicher standhalten. In den Fig. 4 bis 6 ist eine tragbare Ausführungsform des Datenerfassungsgerätes dargestellt. Die Stromversorgung kann ähnlich wie bei den stationären Geräten aus dem 220 V-Netz, von einer Batterie oder Akkumulator, von einer Photovoltaikanlage (Solarzellen) erfolgen. Die Solarzellen 27, die in Mitteleuropa eine Leistung von ca. 10 W aufweisen sollten, werden als 2 × 5-W-Module in einen tragbaren Koffer 28 integriert. Montiert man diese auf die äußeren Kofferflächen, ergibt sich beim Aufschlagen die entsprechende leistungsgerechte Fläche. Eine andere Kombination zeigt die Fig. 6 mit einer im Koffer untergebrachten Solarzelle 29. In diesem Falle muß die Solarzelle 29 bei der Inbetriebnahme der Anlage aus dem Koffer 28 herausgeholt und getrennt aufgestellt werden. Das tragbare Meßgerät wird in folgenden Bereichen eingesetzt: im Hausanschlußbereich, ohne daß Explosionsschutz gefordert wird (in Gasdruckregelstationen der EEx-Zone 2, in Gasdruckregelstationen der EEx-Zone 1). An die Konstruktion des Koffers 28 selbst werden beim Einsatz im Hausanschlußbereich keine besonderen Anforderungen gestellt. Er kann aus handelsüblichem Material gefertigt sein.

In der EEx-Zone 2 muß der Koffer, soll er im Gebäude der Druckregelanlage aufgestellt werden, gasschwadensicher verkapselt sein. In diesem Falle darf das gasschwadensichere Gehäuse erst geöffnet werden, wenn Gasfreiheit nachgewiesen ist. Die in der Leitung installierten Sensoren, z.B. für Druck oder Temperatur usw. sind durch Sicherheitsbarrieren eigensicher gemacht. Für die EEx-Zone 1 (Fig. 8, Raum 29) kommt nur eine Unterbringung des mobilen Gerätes 28 in einem druckfesten Gehäuse, das einer inneren Explosion standhält, in Frage. Geeignet dafür sind z.B. Gehäuse, die über ein entsprechendes Zertifikat verfügen. Bei einer Unterbringung in der Elektronische oder in einem extemen Gehäuse ist die Gasschwadensicherheit nicht gefordert. Es genügt ein Schutzgrad IP 40. Die Sensoren befinden sich allerdings nach wie vor in der EEx-Zone. Hier ist die Trennung der stromführenden Teile entweder mittels optischer Trennwandler (EEx-Zone 1) oder Sicherheitsbarrieren (EEx-Zone 2) zu gewährleisten. Eine andere Lösung, das System in zwei getrennten Gehäusen unterzubringen, bietet sich in der sinngemäßen Anwendung der Variante für ortsfeste Applikationen. Für die EEx-Zone 2 genügen Sicherheitsbarrieren. Ist der Sensor in der EEx-Zone 1 plaziert, werden die beiden Strombarrieren durch optische Trennwandler ersetzt. Das Gehäuse, das über ein Zertifikat der Gasschwadensicherheit verfügt, dient der Aufnahme der Stromversorgungseinheiten. Obwohl es selten geöffnet wird, darf dieses erst nach Prüfen der Gasfreiheit geschehen. Das zweite Gehäuse (Schutzart IP 40) das beliebig oft geöffnet werden darf, zeigt die Bedienelemente auf einer Frontplatte hinter einer Sicherheitsscheibe. Ist der Sensor in der EEx-Zone 1 plaziert, müssen auch hier optische Trennwandler statt der Strombarrieren verwendet werden. Wenn das Gehäuse selbst, z.B. aus Platzgründen, in der EEx-Zone 1 aufzustellen wäre, muß die gesamte Technik in einem einzigen druckfesten Gehäuse untergebracht werden. Alle anderen Funktionen der mobilen Technik können in Analogie der ortsfesten Verfahren aufgebaut werden.

## Patentansprüche

1. Datenerfassungs- und Steuerungsgerät für eine Gasdruckreglerstation mit einem Meßwertaufnehmer (10, 26) zur Erfassung von Daten in Form von Meßwerten und einer Mikroprozessoreinheit (21), der die erfaßten Meßwerte zugeführt werden, dadurch gekennzeichnet, daß das Gerät eine Einheit (35) zur Steuerung des Meßbetriebes aufweist, die die Erfassung der Meßwerte in getaktetem Meßbetrieb steuert, wobei nur einen oberen Grenzwert überschreitende oder einen unteren Grenzwert unterschreitende Meßwerte sowie eine bestimmte Anzahl von meßwerten; die den Grenzwertüberschreitenden meßwerten oder die den Grenzwertunterschreitenden meßwerten vor- und nachlauten, mittels der Mikroprozessoreinheit (21) registriert, gespeichert und ausgewertet werden und daß das Gerät eine Steuerungseinheit (37) zur Steuerung der Betriebskenngrößen, einen Stromanschluß und eine eigene Energieversorgungseinheit aufweist.

2. Datenerfassungs- und Steuerungsgerät nach Anspruch 1, dadurch gekennzeichnet, daß die Daten durch eine zusätzliche Speichereinheit (36) gespeichert werden.

3. Datenerfassungs- und Steuerungsgerät nach Anspruch 2, dadurch gekennzeichnet, daß die zusätzliche Speichereinheit (36) eine MemoryCard ist.

4. Datenerfassungs- und Steuerungsgerät nach einem der vorangegangenen Ansprüche, dadurch gekennzeichnet, daß eine Anzeigeeinheit vorhanden ist

5. Datenerfassungs- und Steuerungsgerät nach einem der vorangegangenen Ansprüche, dadurch gekennzeichnet, daß die Energieversorgungseinheit eine Solarzelle (7), ein Windrad, eine Batterie oder ein Akkumulator (13) ist.

6. Datenerfassungs- und Steuerungsgerät nach einem der vorangegangenen Ansprüche, dadurch gekennzeichnet, daß der Meßwertaufnehmer durch einen Piezomeßsensor (10) gebildet ist.

7. Datenerfassungs- und Steuerungsgerät nach einem der vorangegangenen Ansprüche, dadurch gekennzeichnet, daß ein mobiler PC, Laptop oder ein Notebook, angeschlossen ist.

8. Datenerfassungs- und Steuerungsgerät nach einem der voranaeaangenen Ansprüche, dadurch gekennzeichnet, daß die Einheit (35) zur Steuerung des Meßbetriebes durch ein Wake-up Modul (35) gebildet ist.

9. Datenerfassungs- und Steuerungsgerät nach einem der vorangegangenen Ansprüche, dadurch gekennzeichnet, daß Betriebsarmaturen mittels der Steuerungseinheit (37) zur Steuerung der Betriebskenngrößen gesteuert werden.

10. Datenerfassungs- und Steuerungsgerät nach einem der vorangegangenen Ansprüche, dadurch gekennzeichnet, daß das Gerät ein explosionsgeschütztes Gehäuse aufweist.

11. Datenerfassungs- und Steuerungsgerät nach einem der vorangegangenen Ansprüche, dadurch gekennzeichnet, daß das Gerät tragbar ist.

12. Verfahren zur Aufnahme und Speicherung von Daten in Form von Meßwerten und zur Steuerung für eine Gasdruckreglerstation, wobei die Meßwerte durch eine Meßwertaufnahmeeinheit (10, 26) erfaßt und einer Mikroprozessoreinheit (21) zugeführt werden, dadurch gekennzeichnet, daß die Meßwerte in getaktetem Meßbetrieb erfaßt werden und daß nur einen oberen Grenzwert überschreitende oder einen unteren Grenzwert unterschreitende meßwerte sowie eine bestimmte Anzahl von meßwerten; die den Grenzwertüberschreitenden meßwerten oder die den Grenzwertunterschreitenden meßwerten vor- und nachlauten, mittels der Mikroprozessoreinheit (21) registriert, gespeichert und ausgewertet werden und daß die Betriebsarmaturen der Gasdruckreglerstationen dadurch so gesteuert werden, daß bei Abweichungen eine Regelung vorgenommen wird.

13. Verfahren nach Anspruch 12, dadurch gekennzeichnet, daß die außerhalb der Grenzwerte liegenden Meßwerte komprimiert werden.

14. Verfahren nach Anspruch 12 oder 13, dadurch gekennzeichnet, daß die Meßzyklen einstellbar sind.

15. Verfahren nach Anspruch 14, dadurch gekennzeichnet, daß die Meßzyklen zwischen und 200 ms Betriebszeit bei 2-3 s bis 3 Minuten Taktzeit betragen.

16. Verfahren nach einem der Ansprüche 12 bis 15, dadurch gekennzeichnet, daß Datenfemübertragungen vorgenommen wird.

17. Verfahren nach einem der Ansprüche 12 bis 16, dadurch gekennzeichnet, daß die Auswertung der Daten zusätzlich in einem externen Großrechner erfolgen können.

18. Verfahren nach einem der Ansprüche 12 bis 17, dadurch gekennzeichnet, daß folgende Daten aufgenommen werden: Druck, Temperatur, Volumenstrom, chemische Kenngrößen wie die Konzentration von Odoranten im Erdgas und an Schadgasen in der Raumluft.

19. Verwendung des Gerätes nach einem der Ansprüche 1 bis 11 in Fernwärme- und Stromversorgungsstationen.

## Claims

1. Data recording and control unit for a gas pressure regulating station with a measured value pick up (10, 28) for the recording of data in the form of measured values and a microprocessor unit (21), to which the measured values are supplied, characterised in that the equipment has a unit (35) for the control of the measuring operation, which controls the recording of the measured values in timed measuring operation, whereby only measured values exceeding an upper limit value or falling short of a lower limit value as well as a determined number of measured values which precede and succeed the measured values exceeding the limit value or the measured values falling short of the lower limit value are recorded, stored and evaluated by means of the microprocessor unit (21) and in that the unit has a control unit (37) for the control of the operating characteristic values, a current connection and its own source of power.

2. Data recording and control unit as per Claim 1, characterised in that the data is stored by an additional storage unit (36).

3. Data recording and control unit as per Claim 2, characterised in that the additional storage unit (36) is a memory card.

4. Data recording and control unit according to one of the previous claims, characterised in that there is a display unit.

5. Data recording and control unit according to one of the previous claims, characterised in that the source of power is a solar panel (7), a wind wheel, a battery or an accumulator (13).

6. Data recording and control unit according to one of the previous claims, characterised in that the measured value pick up is formed by means of a piezo measuring sensor (10).

7. Data recording and control unit according to one of the previous claims, characterised in that a mobile PC, Laptop or Notebook is connected.

8. Data recording and control unit according to one of the previous claims, characterised in that the unit (35) for the control of the measuring operation is formed by means of a wake-up module (35).

9. Data recording and control unit according to one of the previous claims, characterised in that operating armatures are controlled by means of the control unit (37) for the control of the operating characteristic values.

10. Data recording and control unit according to one of the previous claims, characterised in that the unit has an explosion-proof housing.

11. Data recording and control unit according to one of the previous claims, characterised in that the unit is portable.

12. Process for the picking up and storage of data in the form of measured values and for control for a gas pressure regulating station, whereby the measured values are recorded by means of a measured value pick up unit (10, 26) and supplied to a microprocessor unit (21), characterised in that the measured values are recorded in timed measuring operation and that only measured values exceeded an upper limit value or falling short of a lower limit value as well as a certain number of measured values which precede or succeed the measured values exceeding the limit value or the measured values falling short of the limit value are recorded, stored and evaluated by means of the microprocessor unit (21) and that the operating armatures of the gas pressure regulating stations are controlled by this means so that a regulation can be made if there are deviations.

13. Process as per Claim 12, characterised in that the measured values lying outside the limit values are compressed.

14. Process as per Claim 12 or 13, characterised in that the measuring cycles are adjustable.

15. Process as per Claim 14, characterised in that the measuring cycles are between * and 200 ms operating time at 2-3 ms up to 3 minutes cycle time.

16. Process according to one of Claims 12 to 15, characterised in that there is remote data transmission.

17. Process according to one of Claims 12 to 16, characterised in that the evaluation of the data can also be done on an external mainframe computer.

18. Process according to one of Claims 12 to 17, characterised in that the following data is recorded: Pressure, temperature, current volume, chemical characteristic values such as the concentration of odorants in natural gas and of harmful gases in the ambient air.

19. Use of the unit according to one of Claims 1 to 11 in remote heating and power supply stations.

## Revendications

1. Appareils de saisie de données et de commande pour une station régulatrice de la pression du gaz, comportant un capteur de valeur de mesure (10, 26) servant à saisir les données sous formes de valeurs de mesure, et une unité à microprocesseur (21) à laquelle sont amenées les valeurs de mesure saisies, caractérisé en ce que l'appareil présente une unité (35) servant à piloter le mode de mesure, lequel pilote la saisie des valeurs de mesure selon un rythme cyclique, seules des valeurs de mesure dépassant par excès une valeur-limite supérieure ou dépassant par défaut une valeur-limite inférieure ainsi qu'un certain nombre de valeurs de mesure antérieures et postérieures aux valeurs de mesure dépassant la valeur-limite supérieure par excès ou la valeur-limite inférieure par défaut, sont enregistrées, mémorisées et analysées au moyen d'une unité à microprocesseur (21), et en ce que l'appareil présente une unité de commande (37) permettant de piloter les paramètres de fonctionnement, un branchement électrique et sa propre unité d'alimentation énergétique.

2. Appareil de saisie de données et de commande selon revendication 1, caractérisé en ce que les données sont mémorisées par une unité-mémoire supplémentaire (36).

3. Appareil de saisie de données et de commande selon revendication 2, caractérisé en ce que l'unité-mémoire supplémentaire (36) est une carte-mémoire.

4. Appareil de saisie de données et de commande selon l'une des revendications précédentes, caractérisé en ce que l'appareil est équipé d'une unité d'affichage.

5. Appareil de saisie de données et de commande selon l'une des revendications précédentes, caractérisé en ce que l'unité d'alimentation énergétique est un panneau solaire (7), une éolienne, une pile ou un accumulateur (13).

6. Appareil de saisie de données et de commande selon l'une des revendications précédentes, caractérisé en ce que le capteur de valeur de mesure est constitué par un capteur de mesure piézoélectrique (10).

7. Appareil de saisie de données et de commande selon l'une des revendications précédentes, caractérisé en ce que lui est raccordé un PC mobile (portable ou calepin électronique).

8. Appareil de saisie de données et de commande selon l'une des revendications précédentes, caractérisé en ce que l'unité (35) pilotant le mode Mesure est formée par un module-réveil (35).

9. Appareil de saisie de données et de commande selon l'une des revendications précédentes, caractérisé en ce que les robinetteries de service sont commandées au moyen de l'unité (37) pour piloter les valeurs des paramètres de service.

10. Appareil de saisie de données et de commande selon l'une des revendications précédentes, caractérisé en ce que l'appareil présente un boîtier anti-détlagrant.

11. Appareil de saisie de données et de commande selon l'une des revendications précédentes, caractérisé en ce que l'appareil est portable.

12. Procédé d'enregistrement et de mémorisation des données sous forme de valeurs de mesure, et de commande d'une station régulatrice de la pression du gaz, les valeurs de mesure étant saisies par une unité d'enregistrement (10, 26) puis amenées à une unité-microprocesseur (21), caractérisé en ce que les valeurs de mesure sont saisies selon un rythme cyclique et en ce que seules des valeurs de mesure dépassant par excès une valeur-limite supérieure ou dépassant par défaut une valeur-limite inférieure ainsi qu'un certain nombre de valeurs de mesure antérieures et postérieures aux valeurs de mesure dépassant la valeur-limite supérieure par excès ou la valeur-limite inférieure par défaut, sont enregistrées, mémorisées et analysées au moyen d'une unité à microprocesseur (21), et en ce que les robinetteries de service des stations régulatrices de gaz sont ainsi pilotées de telle sorte qu'une régulation ait lieu en cas de dérives.

13. Procédé selon revendication 12, caractérisé en ce que les valeurs de mesures dépassant les valeurs-limites sont comprimées.

14. Procédé selon la revendication 12 ou 13, caractérisé en ce que les cycles de mesure sont réglables.

15. Procédé selon revendication 14, caractérisé en ce que les cycles de mesure sont formés d'un temps de fonctionnement compris entre ????? et 200 ms, et d'un temps de pause compris entre 2-3 s et 3 minutes.

16. Procédé selon l'une des revendications 12 à 15, caractérisé en ce que des télétransmissions de données ont lieu.

17. Procédé selon l'une des revendications 12 à 16, caractérisé en ce que l'analyse des données peut se faire en plus au moyen d'un ordinateur externe de grande puissance.

18. Procédé selon l'une des revendications 12 à 17, caractérisé en ce que les paramètres suivants sont enregistrés: impression, température, débit; les paramètres chimiques comme la concentration des substances odorantes contenues dans le gaz naturel et dans les gaz nocifs de l'air ambiant.

19. Utilisation de l'appareil selon l'une des revendications 1 à 11 dans les stations de chauffage urbain et dans les stations d'alimentation électrique.
